# EUROPEAN PATENT SPECIFICATION

(11) **EP 4 699 833 B1**
(45) Date of publication and mention of the grant of the patent: **25.11.2026**
(21) Application number: 25184582.2
(22) Date of filing: 23.06.2025
(51) Int. Cl.: B60H 1/00, B60H 1/32, F25B 5/00, F25B 49/02, F25B 5/02

(54) **COOLING SYSTEM USING A TWO-PHASE COOLANT, FOR COOLING A PLURALITY OF COMPONENTS**
KÜHLSYSTEM MIT EINEM ZWEIPHASIGEN KÜHLMITTEL ZUM KÜHLEN EINER MEHRZAHL VON BAUTEILEN
SYSTÈME DE REFROIDISSEMENT UTILISANT UN RÉFRIGÉRANT À DEUX PHASES POUR REFROIDIR UNE PLURALITÉ DE COMPOSANTS

(30) Priority: 19.08.2024 IT 202400019057
(43) Date of publication of application: 25.02.2026
(73) Proprietor: C.R.F. Società Consortile per Azioni, 10043 Orbassano (Torino) (IT)
(72) Inventor: GARGANO, Marcello, I-10043 Orbassano (Torino) (IT); WILAND, Michael, Auburn Hills - Michigan, 48326 (US); GEORGE, Alexander, Auburn Hills - Michigan, 48326 (US)
(74) Representative: Buzzi, Notaro & Antonielli d'Oulx S.p.A.

(56) References cited:
- EP-A2- 1 855 068
- EP-B1- 2 812 638
- DE-A1- 102021 131 788
- DE-B4- 102018 101 514

## Description

### Field of the invention

The present invention relates to cooling systems for cooling a plurality of components, particularly for cooling a plurality of onboard systems of a vehicle, such as for example the electric battery, the electric traction motor and the passenger compartment of an electric vehicle.

### Background of the invention

In recent times, there has been a need to integrate the cooling systems of various onboard components of a vehicle with each other.

However, studies and experiments conducted by the Applicant have led to the identification of a series of problems that may compromise the efficiency and reliability of a cooling system used to perform a thermoregulation function for multiple vehicle components simultaneously. The main problem is related to the fact that each cooling circuit associated with a given component requires different cooling power and consequently different coolant flow rates. This necessitates controlling the coolant flow rate in the different circuits of the system, while always ensuring efficient and reliable operation.

A cooling system having the characteristics indicated in the preamble of claim 1 is known from any one of documents DE 10 2018 101514 B4, EP 1 855 068 A2 and DE 10 2021 131788 A1. A further solution is known from document EP 2 812 638 B1.

### Object of the invention

It is therefore an object of the present invention to provide a cooling system capable of cooling a plurality of different components simultaneously, particularly a plurality of onboard systems of a vehicle, which ensures efficient and reliable system operation despite the different cooling powers required by the different components.

A further object of the invention is to achieve said objective with a structurally simple and low-cost system.

### Summary of the invention

With a view to achieving the aforementioned objects, the invention is directed to a cooling system having the characteristics of claim 1.

The electronic control unit is configured to detect the liquid level in the stilling tube at a certain periodicity and to consequently control the expansion valve with said periodicity.

The electronic control unit is also configured to control the expansion valve with reference to multiple threshold values of the liquid level in the stilling tube, both upwards and downwards. For example, the expansion valve may be controlled to generate different discrete flow rate variations of the fluid as different threshold values are exceeded, upwards or downwards. Alternatively, the expansion valve may be adjusted continuously.

Thanks to the aforementioned characteristics, the electronic control unit of the system according to the invention is capable of monitoring the total mass of fluid present in said separator tank, and of adjusting said expansion valve, varying the flow rate of the coolant entering the separator tank through said first inlet, in order to maintain the total mass of coolant in the separator tank substantially constant, as the flow rates of two-phase fluid entering the tank from the multiple heat exchangers vary.

Considering that inside the tank the two-phase fluid may be continuously boiling and in a turbulent state due to the system hydraulics and therefore it is not possible to establish a stationary liquid level in a calm state, the system described above allows, in particular, to create in the stilling tube a liquid level equivalent to the stationary state of the two-phase fluid and thus brilliantly solves the problem of controlling the total mass contained in said separator tank.

It should be considered that the thermal power absorbed by each heat exchanger associated with the cooling system described above is variable over time. The coolant exiting a heat exchanger and returning to the separator tank via said second inlet is partly vapor and partly liquid. The percentage of vapor depends on the thermal power absorbed in the heat exchanger and on further control choices and is therefore variable. Consequently, the vapor flow rate from the separator tank to the compressor is also variable instant by instant. If the mass balance entering and exiting the separator tank is not controlled, there is a risk that the separator tank will completely empty or fill up. If the separator tank completely empties, the liquid pump draws vapor and cannot supply the heat exchanger which no longer receives coolant and can therefore no longer perform its function of cooling the associated component. If the separator tank completely fills with liquid, there is a risk that the compressor will receive liquid fluid and become damaged.

On the other hand, controlling the quantity of fluid contained in the separator tank by providing flow meters at the inlets and outlets of the separator would not lead to precise and reliable detection, due to the two-phase (liquid and vapor) nature of the coolant.

In continuing its studies and experiments in this field, the Applicant had initially thought of using a level meter placed directly inside the separator tank. However, this solution too, in itself, does not allow reliable detection, due to the turbulence to which the fluid is subjected inside the separator tank, both because of the fluid flows entering the tank, and because of vibrations and oscillations to which a tank installed onboard a vehicle is subjected, and finally also because of the phase of the coolant which is boiling inside the separator tank. These phenomena, always present, would induce unreliable and imprecise measurements.

However, all the aforementioned problems have been solved in the system described above, thanks to the provision of a level measuring device associated with the aforementioned stilling tube, which is arranged and configured such that the level of the coolant in the stilling tube is substantially a direct function of the total mass of coolant in the separator tank, unaffected by the disturbing phenomena described above.

Naturally, a level sensor associated with a stilling tube is per se prior art and the Applicant certainly does not claim to protect such a device taken by itself as an invention. On the contrary, the fundamental concept of the present invention consists in applying such a per se known device in a two-phase coolant cooling system, wherein one or more separator tanks are connected to one or more heat exchangers to simultaneously cool multiple components that absorb different and time-varying thermal powers, in order to simply solve the problem of ensuring reliable operation of the separator tanks. Moreover, the application of such a device to a cooling system is the only way to know the mass present in the tank under continuous agitation due to the fast dynamics characteristic of coolant systems, and is therefore the only way to control the mass balance in the separator tank where a plurality of flow rates with different liquid/vapor ratios flow in and out.

In a preferred embodiment, the level measuring device comprises a float disposed within the stilling tube and configured to substantially occupy the entire cross-section of the stilling tube, and a sensor of any type, adapted to detect the position of the float within the stilling tube.

In one embodiment, the sensor is a contactless sensor, for example an optical sensor or a magneto-resistive sensor. In the case of an optical sensor, the sensor may be rigidly connected to an upper end of the stilling tube and be configured to detect the distance from the sensor of an upper surface of the float (which is configured to remain always only partially immersed in the fluid within the stilling tube).

In a different embodiment, the sensor may be of the type including a guide and measurement rod, on which the float is guided and which allows detecting the position of the float relative to said rod.

In a first example, the stilling tube is disposed outside an enclosure defining the main chamber of the separator tank, while in a second example, the stilling tube is disposed inside said main chamber of the separator tank.

In both cases, the stilling tube has a lower end communicating with the main chamber adjacent to a lower end of the main chamber and an upper end communicating with the main chamber adjacent to an upper end of the main chamber.

In one embodiment, the upper end of the stilling tube communicates with the main chamber of the separator tank via a restricted passage of determined width. This restricted passage allows equalizing the vapor phase pressure between the stilling tube and the main chamber of the separator tank when pressure variations are slow and/or moderate, while allowing maintaining a minimal overpressure in the stilling tube when rapid pressure drops occur in the main chamber of the separator tank. This serves to prevent the coolant in the stilling tube from evaporating rapidly, causing the float to bounce and thus resulting in imprecise level measurements.

As an alternative to said restricted passage, it is also possible to provide an automatic valve (check valve) that allows bidirectional flow when the pressure delta between tank 10 and stilling tube T is below a predetermined value and that does not allow flow from the stilling tube T towards the main chamber 17 of the separator tank 10 when the pressure delta exceeds the predetermined value. In this second case the pressure between tank 10 and stilling tube T is equalized via the opening from the liquid side but rapid boiling under the float is avoided.

The cooling system according to the invention may be implemented according to different configurations. In a first example, said second inlet and said second outlet of the separator tank are configured for circulation of coolant through a plurality of heat exchangers associated with different components to be cooled. In another example, multiple separator tanks may be provided in parallel, each having its own second outlet and its own second inlet configured for circulation of the coolant through a respective heat exchanger of a plurality of heat exchangers associated with different components to be cooled.

### Detailed description of the invention

Further characteristics and advantages of the invention will become apparent from the following description with reference to the accompanying drawings, provided purely by way of non-limiting example, wherein:
Figure 1 is a schematic diagram of a cooling system according to the invention, in a first simplified configuration,
Figure 2 is a schematic diagram of a reference system according to the invention in a second configuration,
Figure 3 is a schematic diagram of a cooling system according to the invention in a third configuration,
Figure 4 is a schematic diagram showing a level measuring device associated with the separator tank, in an example not forming part of the present invention,
Figure 5 schematically illustrates a first embodiment of the separator tank, or of each separator tank, forming part of the system according to the invention,
Figure 6 shows a variant of Figure 5,
Figure 7 illustrates the variant of Figure 6 in an inclined condition,
Figure 8 shows a variant of the sensor device associated with the stilling tube, and
Figure 9 is a schematic sectional view along line IX-IX of Figure 8.

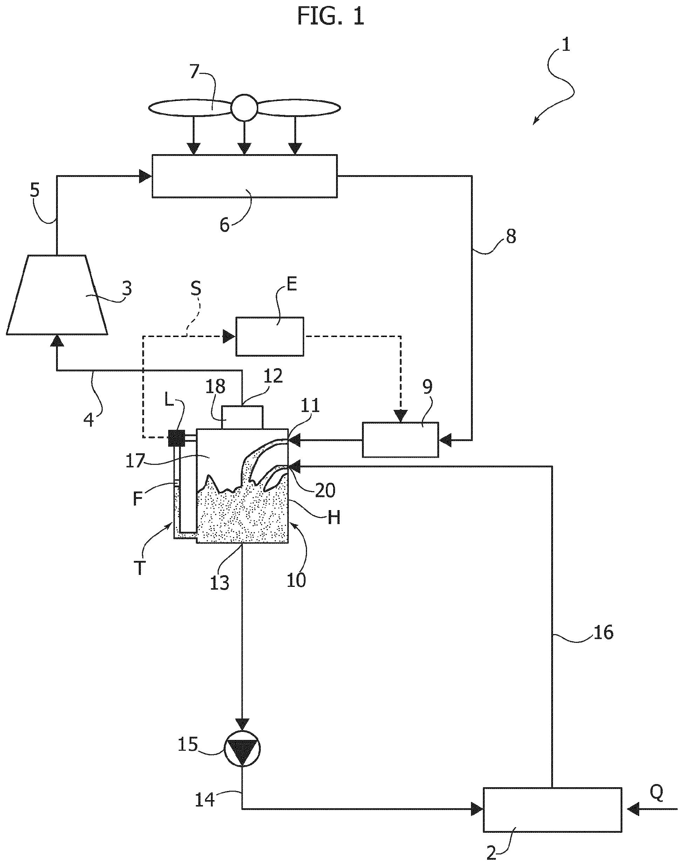

In Figure 1, reference numeral 1 indicates as a whole a cooling system using a two-phase coolant. Figure 1 refers to a simplified example, wherein the coolant of system 1 is circulated through a single heat exchanger 2, associated with a specific component to be cooled, for example the electric battery of an electric vehicle. The cooling fluid circulating in system 1 is used to cool in heat exchanger 2 a further cooling fluid (for example air or a dielectric oil, or water, or a lubricating oil, or other thermoregulation fluid) which is used to cool the electric battery of the electric vehicle. Naturally, the case described above is given here solely as an example, it being evident that the system according to the invention is of general application.

Still with reference to Figure 1, the number 3 indicates a compressor that receives coolant from a line 4 and delivers compressed coolant at its outlet, via a line 5, to a condenser 6.

The structure and operation of compressor 3 and condenser 6 are not described or illustrated here, as such construction details can be implemented in any known manner. In the example, a fan 6 is associated with condenser 6 to supply an airflow through condenser 6 in order to cause condensation of the coolant. The coolant exiting condenser 6 reaches via a line 8 an electrically controlled expansion valve 9, of any known type.

Reference numeral 10 indicates a separator tank, for separating the liquid phase from the vapor phase of the coolant contained therein. The construction structure of separator tank 10 can be implemented in any known manner.

Separator tank 10 has a first inlet 11, for receiving expanded coolant from expansion valve 9, a first outlet 12 (with which a pressure regulator 18 of any known type is associated), through which the coolant is supplied to said compressor 3, a second outlet 13, for supplying the liquid phase coolant from separator tank 10 to heat exchanger 2, via a line 14 in which a pump 15, for example electrically operated, is interposed. The coolant exiting heat exchanger 2 returns to separator tank 10, via a line 16 and a second inlet 20.

In heat exchanger 2, the coolant from separator tank 10 absorbs a variable thermal power Q, depending on the requirements of the component to whose cooling heat exchanger 2 is dedicated.

Separator tank 10 comprises an enclosure H of any known type, defining internally a main chamber 17 for the coolant. The coolant contained in main chamber 17 is in a two-phase state, i.e. partly in liquid state and partly in vapor state. As already explained above, for proper system operation, it is necessary to constantly and continuously monitor the flows entering and exiting main chamber 17 of separator tank 10, in order to prevent tank 10 from completely emptying or filling up.

To this end, in the system according to the invention, the electrically operated expansion valve 9 is controlled, at a certain periodicity, by at least one electronic control unit E, based on a signal S indicative of the total mass of coolant contained in separator tank 10.

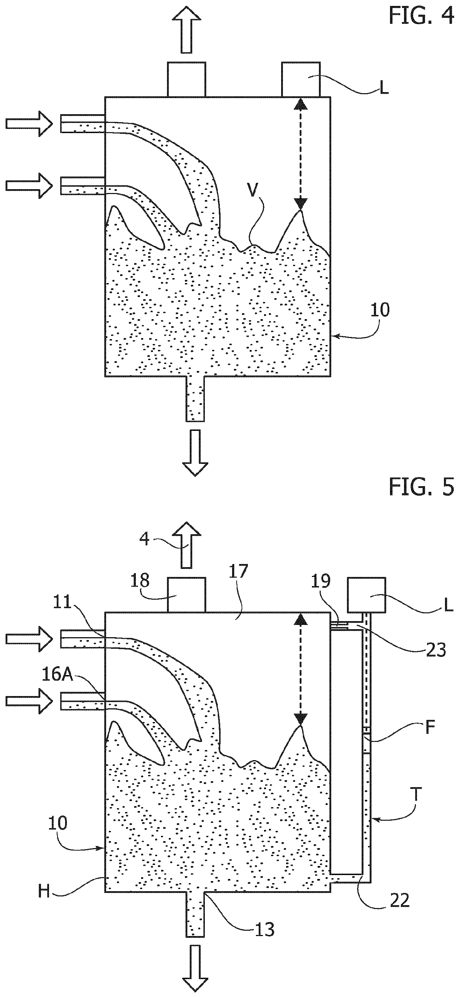

Signal S is sent by a level sensor device associated with a stilling tube T, having a lower end 22 (see Figure 5) communicating with main chamber 17 of separator tank 10, adjacent to the lower end of main chamber 17, and an upper end 23 communicating with main chamber 17 of separator tank 10, adjacent to the upper end of main chamber 17.

Thanks to said arrangement, the liquid level in stilling tube T is unaffected by the turbulence to which the coolant is subjected inside main chamber 17 of separator tank 10. This turbulence stems both from the fluid flows entering main chamber 17, and from the boiling vapor state of part of the fluid in chamber 17, as well as from any vibrations and movements to which separator tank 10 is subjected in case it is installed onboard a vehicle.

The solution described above thus allows obtaining a reliable measurement of the coolant liquid level in stilling tube T, unaffected by turbulence in main chamber 17.

Figure 4 shows a theoretical solution wherein a level sensor device L (for example, an optical sensor) is adapted to detect the distance from sensor L of the free surface V of the fluid in separator tank 10. In the case of such solution, the output signal from sensor device L could not be considered a direct function of the total quantity of coolant mass contained in tank 10.

Figure 5 shows on an enlarged scale the detail of separator tank 10 of Figure 1, with the associated stilling tube T.

Within stilling tube T is disposed a float F, configured so as to occupy almost the entire cross-section of stilling tube T, whereby the vertical movement of float F within tube T is guided by tube T itself.

In the illustrated example, the level sensor device comprises a contactless optical sensor, adapted to detect the distance of float F from sensor device L. Optical sensor device L can be implemented in any known manner and is typically adapted to operate in reflection.

Float F is configured so as to always remain only partially immersed in the liquid within stilling tube T, whereby the upper end of float F is always outside the liquid in stilling tube T and is thus "visible" to sensor L.

Naturally, nothing excludes the use of any other type of contactless sensor (for example a magneto-resistive sensor) to detect the liquid level in stilling tube T.

In the preferred embodiment illustrated in Figure 5, the upper end of stilling tube T communicates with the upper end of main chamber 17 of separator tank 10 via a restricted passage 19 of determined width. As already indicated above, restricted passage 19 allows equalizing the vapor phase pressure in stilling tube T and in main chamber 17 when pressure variations are slow and/or moderate, while allowing maintaining a slight overpressure in stilling tube T relative to main chamber 17 when rapid pressure drops occur in main chamber 17 of separator tank 10. In this way, it is prevented that the fluid in stilling tube T rapidly evaporates causing float F to bounce and thus resulting in imprecise measurements. Said restricted passage 19 can also be replaced by an automatic valve (check valve) that allows bidirectional flow when the pressure delta between tank 10 and stilling tube T is below a predetermined value and that does not allow flow from stilling tube T towards main chamber 17 of separator tank 10 when the pressure delta exceeds the predetermined value. In this second case the pressure between tank 10 and stilling tube T is equalized via the opening from the liquid side but rapid boiling under the float is avoided.

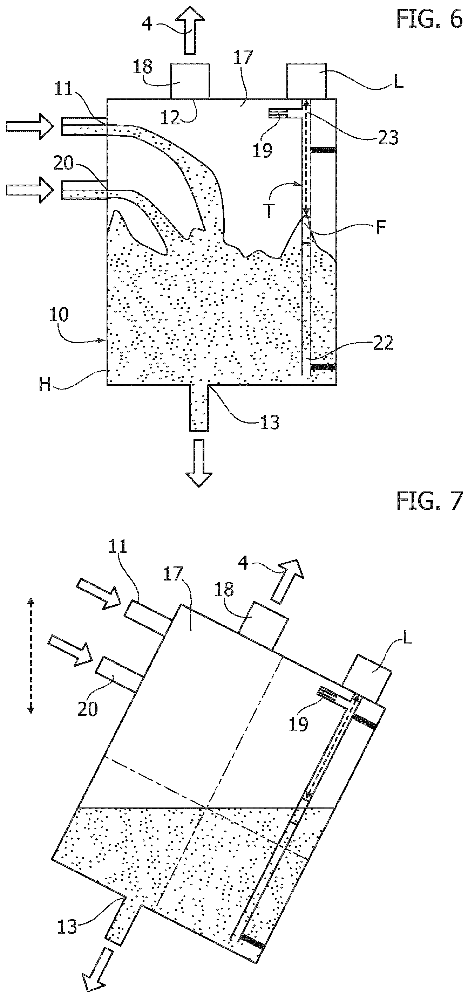

Figure 6 indicates a variant of Figure 5, wherein stilling tube T is implemented inside enclosure H of separator tank 10.

Figure 7 illustrates a condition wherein separator tank 10 is in a position inclined relative to the vertical direction. In this case, the system can be provided with means for detecting the inclination of the tank and the electronic control unit can be configured to process the output signal from sensor device L, taking such inclination into account, in order to convert the data relating to the position of float F in the stilling tube into data relating to the total quantity of coolant mass contained in separator tank 10.

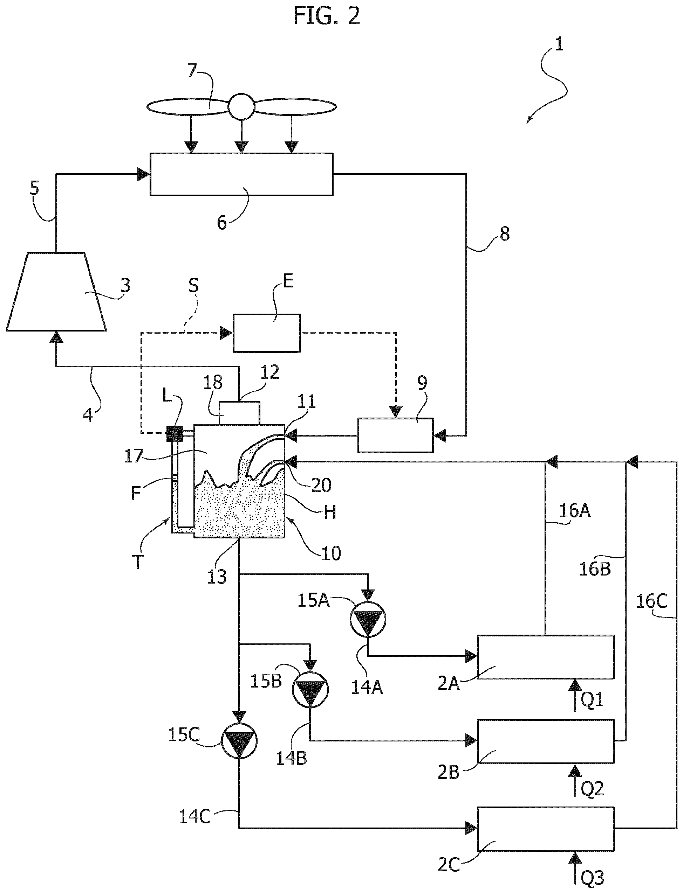

Figure 2 illustrates a first preferred configuration of cooling system 1 according to the invention, wherein the coolant from second outlet 13 of separator tank 10 is sent into a plurality of lines 14A, 14B, 14C arranged in parallel, in which respective supply pumps 15A, 15B, 15C are provided. Via lines 14A, 14B, 14C, the coolant is sent to three heat exchangers 2A, 2B, 2C, associated with three different components to be cooled, after which the coolant exiting the heat exchangers returns via lines 16A, 16B, 16C to second inlet 20 of separator tank 17.

In the embodiment of Figure 2, therefore, a single separator tank 10 is associated with all heat exchangers 2A, 2B, 2C.

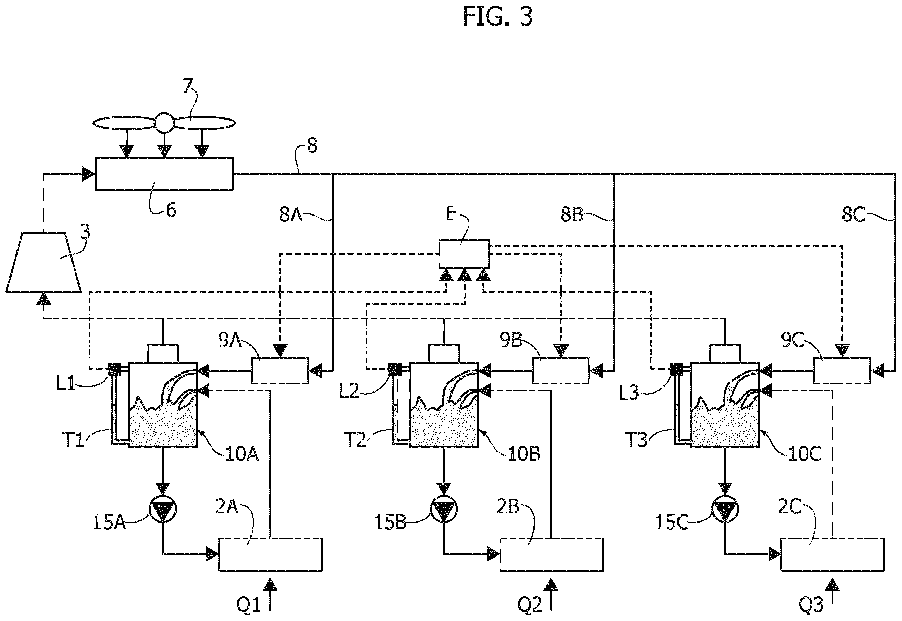

Figure 3 illustrates a second preferred embodiment, wherein three heat exchangers 2A, 2B, 2C are provided for cooling three different components, similarly to what is provided in Figure 2. However, in this case, the three heat exchangers 2A, 2B, 2C are associated with respective circuits including separator tanks 10A, 10B, 10C, expansion valves 9A, 9B, 9C, and supply pumps 15A, 15B, 15C. In the example of Figure 3, a single electronic control unit E receives signals from sensor devices L1, L2, L3, configured to detect the level in stilling tubes T1, T2, T3 associated with separator tanks 10A, 10B, 10C. In the case of Figure 3, the coolant along line 8 exiting condenser 6 splits into three lines 8A, 8B, 8C that convey the coolant to the three expansion valves 9A, 9B, 9C. For the rest, each separator tank operates in the manner described above with reference to Figures 1 and 5.

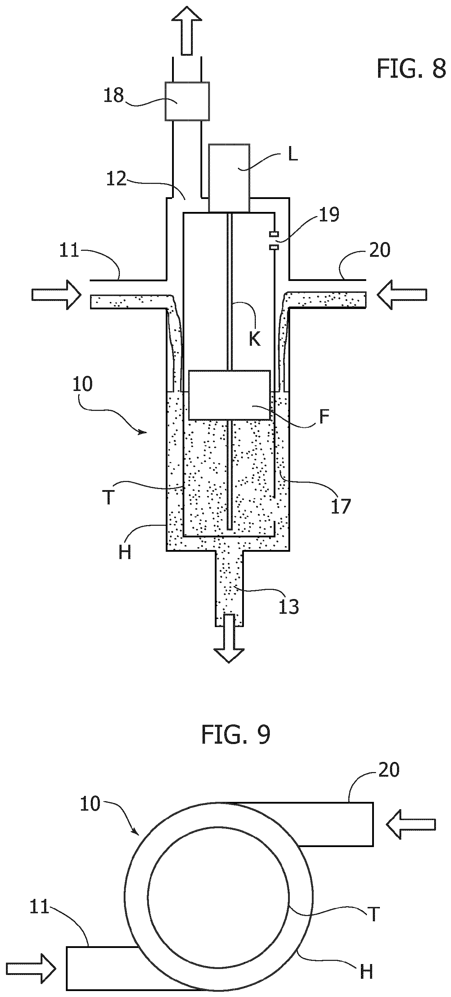

Figure 8 shows a variant of the level sensor associated with stilling tube T. In this case the stilling tube is arranged concentrically inside separator tank 10 and sensor L is of the known type including a guide and measurement rod K on which float F is guided.

As visible in Figure 9, in this case the two inlets 11, 20 are preferably directed tangentially to separator tank 10, which is cylindrical in shape. In this way a centrifugal separation effect between liquid and vapor is obtained.

As clearly results from the foregoing description, the system according to the invention ensures precise and reliable operation of the separator tank, or separator tanks, with which the system is provided, by simple and low-cost means.

Naturally, while the principle of the invention remains unchanged, the construction details and embodiments may vary widely with respect to what has been described and illustrated purely by way of non-limiting example, without thereby departing from the scope of the present invention as defined in the appended claims.

## Claims

1. Cooling system, using a two-phase coolant, for cooling a plurality of components, in particular onboard systems of a vehicle, such as for example the electric battery, the electric traction motor and the passenger compartment of an electric vehicle,
said system including at least one cooling circuit comprising:
- a compressor (3),
- a condenser (6) for the coolant from the compressor (3),
- an electrically controlled expansion valve (9; 9A, 9B, 9C), for expanding the coolant from the condenser (6), and
- at least one separator tank (10; 10A, 10B, 10C), for separating the liquid phase from the vapor phase of the coolant contained therein, said at least one separator tank having:
- a first inlet (11), for receiving expanded coolant from the expansion valve (9),
- a first outlet (12), through which the coolant is supplied to said compressor (3),
- a second outlet (13), for supplying the liquid phase coolant from said separator tank (10; 10A, 10B, 10C) to at least one of a plurality of heat exchangers (2; 2A, 2B, 2C) associated with different components to be cooled, and
- a second inlet (20), for returning to the separator tank (10; 10A, 10B, 10C) the coolant that has passed through said at least one heat exchanger (2; 2A, 2B, 2C),
said system being **characterized in that** it further includes an electronic control unit (E), configured to control said expansion valve (9) in order to maintain the total mass of coolant in the separator tank between a predetermined minimum threshold and a predetermined maximum threshold,
**in that** the separator tank (10; 10A, 10B, 10C) has a main chamber (17) communicating with a stilling tube (T; T1, T2, T3) that is arranged and configured such that the level of the coolant in the stilling tube (T) is substantially a direct function of the total mass of coolant of the separator tank (10, 10A, 10B, 10C), and
**in that** the electronic control unit (E) is configured to control the expansion valve (9) based on the output signal from a level measuring device (F, L) associated with said stilling tube (T; T1, T2,T3), so as to maintain the liquid level within the stilling tube, and consequently the total mass of coolant in the separator tank, between said predetermined minimum threshold and said predetermined maximum threshold.

2. System according to claim 1, **characterized in that** said level measuring device (L, F) comprises a float (F), disposed within the stilling tube (T; T1, T2, T3) and configured to substantially occupy the entire cross-section of the stilling tube, and a sensor (L) for detecting the position of the float.

3. System according to claim 2, **characterized in that** said sensor (L) is a contactless sensor (L), such as an optical sensor or a magneto-resistive sensor.

4. System according to claim 3, **characterized in that** said float (F) is configured to always remain only partially immersed in the fluid within the stilling tube (T; T1, T2, T3) and that said contactless sensor (L) is an optical sensor rigidly connected to an upper end of said stilling tube (T) and configured to detect the distance from the sensor (L) of an upper surface of said float (F).

5. System according to claim 2, **characterized in that** the sensor (L) comprises a guide and measurement rod (K), on which the float (F) is guided.

6. System according to claim 5, **characterized in that** the stilling tube (T) is arranged concentrically inside the separator tank (10), that the separator tank (10) has a cylindrical shape and that the two inlets (11, 20) of the separator tank (10) are arranged tangentially to the separator tank (10) so as to obtain a centrifugal separation effect between liquid and vapor.

7. System according to claim 1, **characterized in that** the separator tank (10; 10A, 10B, 10C) has an enclosure (H) defining said main chamber (17) and that the stilling tube (T; T1, T2, T3) is arranged outside or inside the enclosure (H) and has:
a lower end (22), communicating with the main chamber (17) adjacent to a lower end of the main chamber (17), and
an upper end (23), communicating with the main chamber (17) adjacent to the upper end of the main chamber (17).

8. System according to claim 7, **characterized in that** the upper end (23) of the stilling tube (T; T1, T2, T3) communicates with the main chamber (17) of the separator tank (10; 10A, 10B, 10C) via a restricted passage (19) of determined width.

9. System according to claim 1, **characterized in that** the second inlet (20) and the second outlet (13) of the separator tank (10) are configured for circulation of the coolant through a plurality of heat exchangers (2A, 2B, 10A) associated with different components to be cooled.

10. System according to claim 1, **characterized in that** it comprises a plurality of separator tanks (10A, 10B, 10C) arranged in parallel, each having its second outlet (13) and its second inlet (20) configured for circulation of the coolant through a respective heat exchanger of a plurality of heat exchangers (2A, 2B, 2C) associated with the different components to be cooled.

## Patentansprüche

1. Kühlsystem, das ein Zweiphasen-Kühlmittel verwendet, zum Kühlen einer Vielzahl von Komponenten, insbesondere Bordsystemen eines Fahrzeugs, wie beispielsweise der elektrischen Batterie, des elektrischen Traktionsmotors und des Fahrgastraums eines Elektrofahrzeugs,
wobei das System mindestens einen Kühlkreislauf umfasst, der Folgendes umfasst:
- einen Verdichter (3),
- einen Kondensator (6) für das Kühlmittel aus dem Verdichter (3),
- ein elektrisch gesteuertes Expansionsventil (9; 9A, 9B, 9C) zum Expandieren des Kühlmittels aus dem Kondensator (6), und
- mindestens einen Abscheidebehälter (10; 10A, 10B, 10C) zum Trennen der flüssigen Phase von der Dampfphase des darin enthaltenen Kühlmittels, wobei der mindestens eine Abscheidebehälter Folgendes aufweist:
- einen ersten Einlass (11) zum Aufnehmen von expandiertem Kühlmittel aus dem Expansionsventil (9),
- einen ersten Auslass (12), durch den das Kühlmittel dem Verdichter (3) zugeführt wird,
- einen zweiten Auslass (13) zum Zuführen des Kühlmittels in flüssiger Phase aus dem Abscheidebehälter (10; 10A, 10B, 10C) zu mindestens einem einer Vielzahl von Wärmetauschern (2; 2A, 2B, 2C), die verschiedenen zu kühlenden Komponenten zugeordnet sind, und
- einen zweiten Einlass (20) zum Rückführen des Kühlmittels, das den mindestens einen Wärmetauscher (2; 2A, 2B, 2C) durchlaufen hat, in den Abscheidebehälter (10; 10A, 10B, 10C),
wobei das System **dadurch gekennzeichnet ist, dass** es ferner eine elektronische Steuereinheit (E) umfasst, die zum Steuern des Expansionsventils (9) eingerichtet ist, um die Gesamtmasse des Kühlmittels in dem Abscheidebehälter zwischen einem vorbestimmten Mindestschwellenwert und einem vorbestimmten Höchstschwellenwert zu halten,
dass der Abscheidebehälter (10; 10A, 10B, 10C) eine Hauptkammer (17) aufweist, die mit einem Beruhigungsrohr (T; T1, T2, T3) in Verbindung steht, das so angeordnet und eingerichtet ist, dass der Füllstand des Kühlmittels in dem Beruhigungsrohr (T) im Wesentlichen eine direkte Funktion der Gesamtmasse des Kühlmittels des Abscheidebehälters (10, 10A, 10B, 10C) ist, und
dass die elektronische Steuereinheit (E) zum Steuern des Expansionsventils (9) basierend auf dem Ausgangssignal einer Füllstandsmessvorrichtung (F, L) eingerichtet ist, die dem Beruhigungsrohr (T; T1, T2, T3) zugeordnet ist, um so den Flüssigkeitsstand innerhalb des Beruhigungsrohrs und folglich die Gesamtmasse des Kühlmittels in dem Abscheidebehälter zwischen dem vorbestimmten Mindestschwellenwert und dem vorbestimmten Höchstschwellenwert zu halten.

2. System nach Anspruch 1, **dadurch gekennzeichnet, dass** die Füllstandsmessvorrichtung (L, F) einen Schwimmer (F) umfasst, der innerhalb des Beruhigungsrohrs (T; T1, T2, T3) angeordnet und eingerichtet ist, im Wesentlichen den gesamten Querschnitt des Beruhigungsrohrs einzunehmen, und einen Sensor (L) zum Erkennen der Position des Schwimmers.

3. System nach Anspruch 2, **dadurch gekennzeichnet, dass** der Sensor (L) ein berührungsloser Sensor (L) ist, wie etwa ein optischer Sensor oder ein magnetoresistiver Sensor.

4. System nach Anspruch 3, **dadurch gekennzeichnet, dass** der Schwimmer (F) eingerichtet ist, stets nur teilweise in das Fluid innerhalb des Beruhigungsrohrs (T; T1, T2, T3) eingetaucht zu bleiben, und dass der berührungslose Sensor (L) ein optischer Sensor ist, der starr mit einem oberen Ende des Beruhigungsrohrs (T) verbunden und eingerichtet ist, den Abstand einer oberen Oberfläche des Schwimmers (F) von dem Sensor (L) zu erkennen.

5. System nach Anspruch 2, **dadurch gekennzeichnet, dass** der Sensor (L) eine Führungs- und Messstange (K) umfasst, an der der Schwimmer (F) geführt wird.

6. System nach Anspruch 5, **dadurch gekennzeichnet, dass** das Beruhigungsrohr (T) konzentrisch innerhalb des Abscheidebehälters (10) angeordnet ist, dass der Abscheidebehälter (10) eine zylindrische Form aufweist und dass die beiden Einlässe (11, 20) des Abscheidebehälters (10) tangential zu dem Abscheidebehälter (10) angeordnet sind, um einen Zentrifugaltrenneffekt zwischen Flüssigkeit und Dampf zu erzielen.

7. System nach Anspruch 1, **dadurch gekennzeichnet, dass** der Abscheidebehälter (10; 10A, 10B, 10C) ein Gehäuse (H) aufweist, das die Hauptkammer (17) definiert, und dass das Beruhigungsrohr (T; T1, T2, T3) außerhalb oder innerhalb des Gehäuses (H) angeordnet ist und Folgendes aufweist:
ein unteres Ende (22), das mit der Hauptkammer (17) benachbart zu einem unteren Ende der Hauptkammer (17) in Verbindung steht, und
ein oberes Ende (23), das mit der Hauptkammer (17) benachbart zu dem oberen Ende der Hauptkammer (17) in Verbindung steht.

8. System nach Anspruch 7, **dadurch gekennzeichnet, dass** das obere Ende (23) des Beruhigungsrohrs (T; T1, T2, T3) über eine begrenzte Öffnung (19) von bestimmter Breite mit der Hauptkammer (17) des Abscheidebehälters (10; 10A, 10B, 10C) in Verbindung steht.

9. System nach Anspruch 1, **dadurch gekennzeichnet, dass** der zweite Einlass (20) und der zweite Auslass (13) des Abscheidebehälters (10) für die Zirkulation des Kühlmittels durch eine Vielzahl von Wärmetauschern (2A, 2B, 10A) eingerichtet sind, die verschiedenen zu kühlenden Komponenten zugeordnet sind.

10. System nach Anspruch 1, **dadurch gekennzeichnet, dass** es eine Vielzahl von Abscheidebehältern (10A, 10B, 10C) umfasst, die parallel angeordnet sind, wobei jeder seinen zweiten Auslass (13) und seinen zweiten Einlass (20) für die Zirkulation des Kühlmittels durch einen jeweiligen Wärmetauscher einer Vielzahl von Wärmetauschern (2A, 2B, 2C) eingerichtet hat, die den verschiedenen zu kühlenden Komponenten zugeordnet sind.

## Revendications

1. Système de refroidissement, utilisant un fluide de refroidissement diphasique, pour refroidir une pluralité de composants, en particulier des systèmes embarqués d'un véhicule, tels que par exemple la batterie électrique, le moteur de traction électrique et l'habitacle d'un véhicule électrique,
ledit système incluant au moins un circuit de refroidissement comprenant :
- un compresseur (3),
- un condenseur (6) pour le fluide de refroidissement provenant du compresseur (3),
- un détendeur à commande électrique (9 ; 9A, 9B, 9C), pour détendre le fluide de refroidissement provenant du condenseur (6), et
- au moins un réservoir séparateur (10 ; 10A, 10B, 10C), pour séparer la phase liquide de la phase vapeur du fluide de refroidissement contenu dans celui-ci, ledit au moins un réservoir séparateur ayant :
- une première entrée (11), pour recevoir le fluide de refroidissement détendu provenant du détendeur (9),
- une première sortie (12), à travers laquelle le fluide de refroidissement est fourni audit compresseur (3),
- une deuxième sortie (13), pour fournir le fluide de refroidissement en phase liquide depuis ledit réservoir séparateur (10 ; 10A, 10B, 10C) vers au moins un d'une pluralité d'échangeurs de chaleur (2 ; 2A, 2B, 2C) associés à différents composants à refroidir, et
- une deuxième entrée (20), pour retourner au réservoir séparateur (10 ; 10A, 10B, 10C) le fluide de refroidissement qui a traversé ledit au moins un échangeur de chaleur (2 ; 2A, 2B, 2C),
ledit système étant **caractérisé en ce qu'**il inclut en outre une unité de commande électronique (E), configurée pour commander ledit détendeur (9) afin de maintenir la masse totale de fluide de refroidissement dans le réservoir séparateur entre un seuil minimum prédéterminé et un seuil maximum prédéterminé,
**en ce que** le réservoir séparateur (10 ; 10A, 10B, 10C) a une chambre principale (17) communiquant avec un tube de tranquillisation (T ; T1, T2, T3) qui est agencé et configuré de sorte que le niveau du fluide de refroidissement dans le tube de tranquillisation (T) soit sensiblement une fonction directe de la masse totale de fluide de refroidissement du réservoir séparateur (10, 10A, 10B, 10C), et
**en ce que** l'unité de commande électronique (E) est configurée pour commander le détendeur (9) sur la base du signal de sortie d'un dispositif de mesure de niveau (F, L) associé audit tube de tranquillisation (T ; T1, T2, T3), de manière à maintenir le niveau de liquide à l'intérieur du tube de tranquillisation, et par conséquent la masse totale de fluide de refroidissement dans le réservoir séparateur, entre ledit seuil minimum prédéterminé et ledit seuil maximum prédéterminé.

2. Système selon la revendication 1, **caractérisé en ce que** ledit dispositif de mesure de niveau (L, F) comprend un flotteur (F), disposé à l'intérieur du tube de tranquillisation (T ; T1, T2, T3) et configuré pour occuper sensiblement toute la section transversale du tube de tranquillisation, et un capteur (L) pour détecter la position du flotteur.

3. Système selon la revendication 2, **caractérisé en ce que** ledit capteur (L) est un capteur sans contact (L), tel qu'un capteur optique ou un capteur magnéto-résistif.

4. Système selon la revendication 3, **caractérisé en ce que** ledit flotteur (F) est configuré pour rester toujours uniquement partiellement immergé dans le fluide à l'intérieur du tube de tranquillisation (T ; T1, T2, T3) et **en ce que** ledit capteur sans contact (L) est un capteur optique relié rigidement à une extrémité supérieure dudit tube de tranquillisation (T) et configuré pour détecter la distance depuis le capteur (L) d'une surface supérieure dudit flotteur (F).

5. Système selon la revendication 2, **caractérisé en ce que** le capteur (L) comprend une tige de guidage et de mesure (K), sur laquelle le flotteur (F) est guidé.

6. Système selon la revendication 5, **caractérisé en ce que** le tube de tranquillisation (T) est agencé concentriquement à l'intérieur du réservoir séparateur (10), **en ce que** le réservoir séparateur (10) a une forme cylindrique et **en ce que** les deux entrées (11, 20) du réservoir séparateur (10) sont agencées tangentiellement au réservoir séparateur (10) de manière à obtenir un effet de séparation centrifuge entre le liquide et la vapeur.

7. Système selon la revendication 1, **caractérisé en ce que** le réservoir séparateur (10 ; 10A, 10B, 10C) a une enceinte (H) définissant ladite chambre principale (17) et **en ce que** le tube de tranquillisation (T ; T1, T2, T3) est agencé à l'extérieur ou à l'intérieur de l'enceinte (H) et a :
une extrémité inférieure (22), communiquant avec la chambre principale (17) adjacente à une extrémité inférieure de la chambre principale (17), et
une extrémité supérieure (23), communiquant avec la chambre principale (17) adjacente à l'extrémité supérieure de la chambre principale (17).

8. Système selon la revendication 7, **caractérisé en ce que** l'extrémité supérieure (23) du tube de tranquillisation (T ; T1, T2, T3) communique avec la chambre principale (17) du réservoir séparateur (10 ; 10A, 10B, 10C) par l'intermédiaire d'un passage restreint (19) de largeur déterminée.

9. Système selon la revendication 1, **caractérisé en ce que** la deuxième entrée (20) et la deuxième sortie (13) du réservoir séparateur (10) sont configurées pour la circulation du fluide de refroidissement à travers une pluralité d'échangeurs de chaleur (2A, 2B, 10A) associés à différents composants à refroidir.

10. Système selon la revendication 1, **caractérisé en ce qu'**il comprend une pluralité de réservoirs séparateurs (10A, 10B, 10C) agencés en parallèle, chacun ayant sa deuxième sortie (13) et sa deuxième entrée (20) configurées pour la circulation du fluide de refroidissement à travers un échangeur de chaleur respectif d'une pluralité d'échangeurs de chaleur (2A, 2B, 2C) associés aux différents composants à refroidir.
